# EUROPEAN PATENT APPLICATION

(11) **EP 4 212 791 A1**
(43) Date of publication of application: **19.07.2023**
(21) Application number: 22382938.3
(22) Date of filing: 05.10.2022
(51) Int. Cl.: F24S 30/425, H02S 20/32

(54) **SOLAR TRACKING DEVICE**

(30) Priority: 14.01.2022 ES 202230024
(71) Applicant: Ignis Energy Holdings, S.L., 28016 Madrid (ES)
(72) Inventor: SIEIRA MUCIENTES, Antonio Arturo, 28016 Madrid (ES)
(74) Representative: Pons

(57) **Abstract**

The invention relates to a solar tracking device (1) comprising a rotating bar (2) extending longitudinally along a horizontal axis, wherein said rotating bar (2) is configured to rotate when driven by a motor to perform solar tracking, a plurality of photovoltaic panels (3) separated from one another by a separation distance (d), operatively coupled to the rotating bar (2), and arranged in a perpendicular manner thereto, wherein each photovoltaic panel (2) is rigidly coupled to the rotating bar (2) by at least two rods (4) such that each photovoltaic panel (3) has an angle of inclination (α) with respect to the horizontal axis along which the rotating bar (2) extends, and accordingly performs single-axis solar tracking, keeping the angle of inclination (α) constant throughout the tracking.

## Description

### OBJECT OF THE INVENTION

The present invention is comprised within the technical field of single-axis solar tracking devices. More particularly, the object of the present invention relates to a solar tracking device with a plurality of photovoltaic panels arranged along a rotating bar, the configuration of which allows tracking solar altitude according to the east-west polar axes, maintaining a constant inclination towards the north or south in order to maximize energy capture and reduce mechanism complexity.

### BACKGROUND OF THE INVENTION

Some single-axis solar tracking devices are known to maintain the inclination of panels constant about a horizontal axis.

For example, document ES1064510 (U) describes a solar tracker comprising a set of solar panels mounted in a collapsible manner in the lateral direction according to an inclined axis of rotation which is parallel to the longitudinal axis of the solar panels, wherein each solar panel is supported by vertical towers of different heights, such that said height difference of the towers defines the angle of inclination of the solar panel with respect to the horizontal plane. Particularly, the axis of rotation is inclined with respect to the horizontal plane and linked to the rest of the mechanism by a mechanism consisting of cranks and slides.

More particularly, said document describes a rail along which a slide runs driven by a linear actuator which is in turn driven by a motor. In addition, each slide is linked to the set of solar panels by means of connecting rods in order to perform simultaneous movement about the inclined axes thereof. The complexity of the mechanism made from a plurality of necessary mechanical elements (slide, connecting rods, linear actuator) results in the need for greater maintenance, as well as possible unwanted mechanical failures. In addition, the described device requires two vertical towers of different heights to support each panel.

In contrast, document US2008308091 (A1) describes a solar tracker comprising a horizontal structure which incorporates a ball and socket joint at its longitudinal attachments, wherein each axis has a linear rotation actuator which causes all the solar panels to pivot, and wherein the linear rotation actuator is secured to the structure by means of a connecting rod-crank transmission system. It should be noted that the photovoltaic panels do not present any inclination with respect to the axis of rotation or with respect to the horizontal axis along which said axis of rotation extends, resulting in drawbacks in energy production, particularly at latitudes far from the equator.

### DESCRIPTION OF THE INVENTION

The present invention aims to solve some of the problems mentioned in the state of the art. More particularly, the object of the invention relates to a solar tracking device, comprising:
- a rotating bar extending longitudinally along a horizontal axis, wherein said rotating bar is configured to rotate when driven by a motor to perform solar tracking,
- a plurality of photovoltaic panels separated from one another by a separation distance, operatively coupled to the rotating bar, and arranged in a perpendicular manner thereto, and
wherein each photovoltaic panel is rigidly coupled to the rotating bar by at least two rods comprising a distal end and a proximal end, wherein each rod is attached at a proximal end to the rotating bar and at the distal end to an upper portion of the photovoltaic panel, said rods being coupled such that each photovoltaic panel has an angle of inclination with respect to the horizontal axis along which said rotating bar extends, and accordingly performs single-axis solar tracking, keeping the angle of inclination (α) constant throughout the tracking.

In a preferred embodiment, the rotating bar extends along the north-south polar axis such that, when it rotates about its longitudinal axis, it allows the tracking of the photovoltaic panel capture surfaces depending on the solar altitude along the east-west polar axis. In addition, the photovoltaic panels can be arranged at an angle of inclination with respect to the south or with respect to the north depending on the latitude of the location where the photovoltaic device is to be installed.

The solar tracking device described above allows tracking solar height, for example, on the east-west axis, maintaining an optimized and non-zero constant inclination with respect to the longitudinal axis of the rotating bar which is arranged in a horizontal plane.

The angle of inclination can be sized such that energy production throughout the year is maximized. Alternatively, the inclination can be set to maximize production at peak demand times.

The device proposed above is a robust and simple mechanism which reduces costs and complexity compared to other known tracking systems.

In a preferred embodiment, the rods are attached to the rotating bar by means of a plurality of anchoring plates arranged in a perpendicular manner thereto and separated from one another.

More particularly, the two rods that attach each photovoltaic panel with the rotating bar can be attached to each anchoring plate through opposite surfaces thereof, and by means of screws, nuts, and washers which prevent loosening, for example.

In addition, each photovoltaic panel can be provided with at least two threaded holes located in the upper portion and at opposite ends of each photovoltaic panel, and the rods comprise an attachment appendage at their distal end, such that the attachment appendage of each rod is attached to the threaded hole by attachment elements. The attachment elements can be screws which go through the attachment appendage until they screwed into the hole, complemented by nuts and washers which prevent loosening.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:

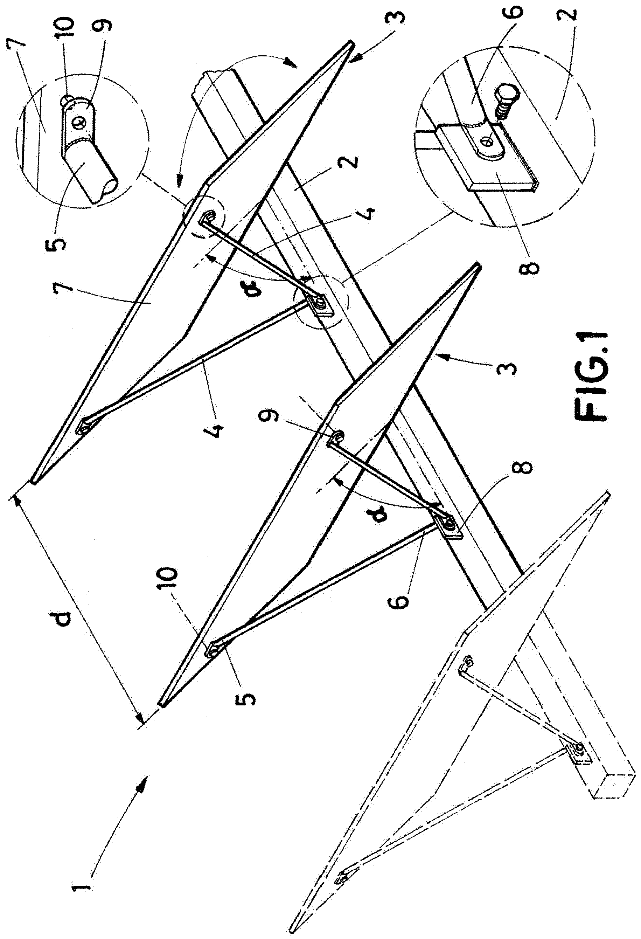

Figure 1 shows a perspective view of a preferred embodiment of the solar tracking device according to the present invention, in which a plurality of photovoltaic panels arranged in a row and coupled along the rotating bar at an angle of inclination, by means of one pair of rods per photovoltaic panel, is illustrated.

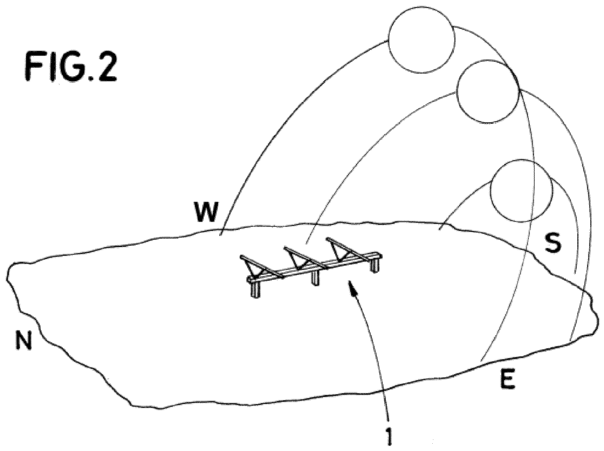

Figure 2 shows a schematic view of the solar tracking device of Figure 1, in which the rotating bar extends along a horizontal axis substantially parallel to the north-south polar axis and the photovoltaic panels are oriented towards the south at an angle of inclination that remains constant during tracking.

### PREFERRED EMBODIMENT OF THE INVENTION

A detailed description of a preferred exemplary embodiment of the solar tracking device object of the present invention is provided below, with the aid of the attached Figures 1-2 described above.

More particularly, as can be seen in Figure 1, the object of the invention relates to a solar tracking device (1) comprising a rotating bar (2) extending longitudinally along a horizontal axis, wherein said rotating bar (2) is configured to rotate when driven by a motor to perform solar tracking, and furthermore a plurality of photovoltaic panels (3) separated from one another by a separation distance (d), operatively coupled to the rotating bar (2), and arranged in a perpendicular manner thereto.

More particularly, Figure 1 shows that each photovoltaic panel (3) is coupled to the rotating bar (2) at a constant angle of inclination (α) with respect to the horizontal axis along which the rotating bar (2) extends, with what has been described above being materialized by at least two rods (4) comprising a distal end (5) and a proximal end (6), wherein each rod (4) is attached at a proximal end (6) to the rotating bar (2) and at the distal end (6) to an upper portion (7) of the photovoltaic panel (3).

In the preferred embodiment of Figure 1, the two rods (4) are attached to anchoring plates (9) through opposite surfaces thereof, wherein each anchoring plate (9) is rigidly attached to the rotating bar (2) and protrudes in a perpendicular manner therefrom.

Likewise, each photovoltaic panel (3) comprises at least two threaded holes (10) located in the upper portion (7) and at opposite ends of said photovoltaic panel (3), and the rods (4) comprise an attachment appendage (9), such that the attachment appendage (9) of each rod (4) is attached to the threaded hole (10) by attachment elements.

The attachment appendages (9) may have a slope or inclination designed to keep the photovoltaic panels (3) inclined with respect to the rotating bar (2) at a predetermined and optimized angle of inclination (α).

## Claims

1. A solar tracking device (1) comprising:
- a rotating bar (2) extending longitudinally along a horizontal axis, wherein said rotating bar (2) is configured to rotate when driven by a motor to perform solar tracking,
- a plurality of photovoltaic panels (3) separated from one another by a separation distance (d), operatively coupled to the rotating bar (2), and arranged in a perpendicular manner thereto, and
**characterized in that** each photovoltaic panel (3) is rigidly coupled to the rotating bar (2) by at least two rods (4) comprising a distal end (5) and a proximal end (6), wherein each rod (4) is attached at a proximal end (6) to the rotating bar (2) and at the distal end (6) to an upper portion (7) of the photovoltaic panel (3), said rods being coupled such that each photovoltaic panel (3) has an angle of inclination (α) with respect to the horizontal axis along which said rotating bar (2) extends, and accordingly performs single-axis solar tracking, keeping the angle of inclination (α) constant throughout the tracking.

2. The solar tracking device (1) according to claim 1, wherein the at least two rods (4) are attached to anchoring plates (9) through opposite surfaces thereof, wherein each anchoring plate (9) is rigidly attached to the rotating bar (2) and protrudes in a perpendicular manner therefrom.

3. The solar tracking device (1) according to claim 1, wherein each photovoltaic panel (3) comprises at least two threaded holes (10) located in the upper portion (7) and at opposite ends of said photovoltaic panel (3), and the rods (4) comprise an attachment appendage (9), such that the attachment appendage (9) of each rod (4) is attached to the threaded hole (10) by attachment elements.
